Europäisches Patentamt

European Patent Office

Office européen des brevets

(11) Publication number: **0 218 483**
A2

# EUROPEAN PATENT APPLICATION

(21) Application number: 86307683.2

(22) Date of filing: 03.10.86

(51) Int. Cl.⁴: **B 62 D 33/04,** B 60 P 3/20

(30) Priority: 04.10.85 GB 8524537

(43) Date of publication of application: 15.04.87
Bulletin 87/16

(84) Designated Contracting States: DE ES FR GB NL

(71) Applicant: BOALLOY LIMITED, Radnor Park Trading
Estate West Heath, Congleton Cheshire CW12 4QA
(GB)

(72) Inventor: Broadbent, Edward Gerald, The
Pantiles 91 Park Lane, Sandbach Cheshire (GB)

(74) Representative: Massey, Alexander et al, MARKS &
CLERK Suite 301 Sunlight House Quay Street,
Manchester, M3 3JY (GB)

(54) Van bodies.

(57) A method of manufacturing a freight-carrying van com-
prises pre-assembling the van body and providing the floor with
bolt-receiving slots and/or holes, and adapting a vehicle chas-
sis by fitting runners to its frame members, which runners have
bolt-receiving holes and/or slots. The van body is then mount-
ed on the runners and the slots and holes matched and the van-
body and chassis are bolted together.

The van body may be of non-chilled or refrigerated construc-
tion or it may be of chilled or refrigerated construction.

It comprises a basic common carcass of floor, roof and
front and rear bulkheads bolted and/or rivetted together.

The sides, which are bolted and/or rivetted to the carcass,
may comprise any of the following side closure assemblies,
namely solid wall, slidable horizontal and vertical tensionable
curtain, slidable curtain/panel or door combination, or sliding
door.

These side closure assemblies are readily interchangeable.

- 1 -

## VAN BODIES

This invention relates to van bodies and to a method of producing same.

It is an object of the present invention to provide a pre-assembled van body adapted to be coupled onto any one of a number of different vehicle chassis.

It is also an object of the present invention to provide a number of different pre-assembled van bodies each adapted to be coupled onto a selected one of a number of different vehicle chassis.

It is yet another object of the present invention to provide a plurality of pre-assembled van bodies having a number of common structural features whereby a van body of one construction coupled onto a vehicle chassis can easily and readily be changed to a van body of another construction.

The present invention is especially but not exclusively applicable to vehicles or vans of 7.5 tonnes weight but may equally well be applied to a range of vehicles or vans of different weights, say, for example 16 tonnes.

Vehicle chassis of 7.5 tonnes capacity to which the present invention may be applied include, inter alia, those manufactured by Ford, Bedford, Leyland (Roadrunner), Mercedes, MAN, Iveco, Volvo and Dodge, all of which have different wheelbases and/or chassis configurations.

The present invention envisages ten different van body constructions but more or fewer constructions may be provided.

Each pre-assembled van body construction according to the present invention has a front closed bulkhead, a rear bulkhead closable by either hinged

0218483

- 2 -

doors or a movable shutter or closed by a fixed wall, a floor and a roof supported above the floor by the front and rear bulkheads, the main but by no means the only distinction between the different pre-assembled van bodies lying in the different side closure assemblies of the van bodies.

The ten van bodies are as follows:-

(A)  a box van body - the side assemblies of the van are constituted by rigid walls, preferably of multi-ply glass-reinforced plastics (GRP) but possibly of aluminium;

(B)  an insulated van body - the side assemblies, inter alia, are rigid walls incorporating or having associated therewith insulated material, for example a GRP-coated plywood sandwich infilled with insulating material, such as plastics foam, and a chiller unit may be fitted to the van body to maintain the internal temperature at the desired level;

(C)  a refrigerated van body (reefer) - similar to the insulated van body but with thicker insulation and with a refrigerator unit fitted;

(D)  a laundry van which is as van body (A) save that the kerbside side assembly incorporates a forwardly-positioned sliding door to permit side access to the van body interior;

(E)  a curtainsided van body as, for example, that sold by the Applicants under their Registered Trade Mark "TAUTLINER", but generally a van body in which the open sides are closable by curtains tensioned or constrained both horizontally and vertically when drawn across the open sides to close same;

(F)  a curtainsided van body similar to van body (E) as, for example, that sold by the Applicants under their Registered Trade Mark "INSULINER" wherein the curtains are of insulated construction with the other parts of the van body also of insulated construction and with a refrigerator unit fitted to the van body;

(G) a van body similar to van body (F) but having a lesser degree or thickness of insulation and possibly having a chiller unit fitted such, for example, as is sold by the Applicants under their Registered Trade Mark "FRESHLINER";

(H) an urban delivery van body as, for example, that sold by the Applicants under their Registered Trade Mark "LOCALINER" with slidable side closing assemblies consisting of a central curtain incorporating horizontally-spaced vertical emergency load-retention poles or similar extending between roof and floor and being horizontally-tensioned when the side assembly is closed, and two end doors;

(I) a sliding door van body as, for example, that sold by the Applicants under their Registered Trade Mark "LINKLINER", the side closure assemblies consisting of sliding doors with one thereof possibly including a hinged door, or more generally simply one or more sliding doors;

(J) an insulating sliding door van body as van body (I) but with the side closure assemblies and other parts of insulated construction.

The side closure assemblies of whatever construction are connected to and/or are supported by a roof level cant rail save in the case of van body (C) where the roof is supported directly on the side closure assemblies and is capped, and by a floor level rave, both raves extending between the front and rear bulkheads.

- 4 -

According to one aspect of the present invention each body version is of bolted or rivetted construction whereby any damaged part can easily and readily be changed or whereby one body version, say a box van body, can be easily and readily converted to a different body version, say a curtainsided van body, by simply stripping off the box van body side closure assemblies and replacing them with curtain side closure assemblies, the front and rear bulkheads, floor and roof remaining the same.

More specifically a van body according to the present invention comprises a number of welded sub-assemblies and other structural elements adapted to be releasably connected together by bolting or rivetting, preferably pop-rivetting.

In the case of a pop-rivetted construction, the connection between sub-assemblies and/or structural elements is easily effected by skimming or shaving off the heads of the pop rivets and pushing out the rivet stems.

A feature of the present invention is that the front and rear bulkheads are welded sub-assemblies common to all ten body versions.

Another sub-assembly common to all ten body versions is the floor sub-frame of bolted and rivetted construction, which sub-assembly takes into account variations in different vehicle chassis and wheelbases.

Rainwater control elements attached to the rooves are common to all ten body versions.

Other structural elements are common to some body versions, for example the box, insulated and refrigerated van bodies have a common rubbing strip, while a number of structural elements are peculiar to a particular body version, for example the curtainsided body (insulated or not) and the urban delivery van body (insulated or not) each have an individual curtain track.

Another aspect of the present invention is therefore a kit of parts for assembling a van body by bolting and/or rivetting the parts together, the parts comprising welded sub-assemblies, structural elements and side closure assemblies.

Preferably the kit of parts includes a combination of welded sub-assemblies and structural elements from which more than one construction of van body can be assembled.

Preferably the kit of parts contains welded sub-assemblies and structural elements permitting assembly of any one of the aforesaid ten body versions therefrom.

It is to be understood that a body version may have two different side closure assemblies, one on each side. For example, a fixed closed wall on one side and a curtain on the other side.

The method of producing a van body version according to the present invention comprises assembling the required body version on the workshop or factory floor, bringing the vehicle chassis into the factory, adapting the latter to provide a coupling interface with the floor assembly of the body version, mounting the body version on the adapted chassis, and bolting and/or rivetting them together.

As a result the basic chassis can be converted into a van with a specific body version as called for by the customer normally within one day or less.

The body version is assembled using jigs from the welded sub-assemblies, structural elements and side closure assemblies taken from stock or stores.

While reference has been made to bolting and rivetting it will be manifest that where a wood structural element is involved wood screws or similar will be used. Also adhesives or adhesive strips may also be employed.

Examples of the present invention will now be described with reference to the accompanying drawings which illustrate examples of welded sub-assemblies and structural components included in a kit of parts from which any one of the six versions of van body can be assembled.

In the drawings:-

Fig. 1 is a side view showing the general configuration of a 7.5 tonne vehicle with a van body to which the present invention is applied;

Fig. 2 illustrates in perspective view the principle of the present invention showing five different side closure assemblies;

Fig. 3 is an exploded view and detail views of the floor sub-assembly;

Fig. 4 is a perspective view and detail and sectional views of a roof with the common rainwater control elements;

Fig. 5 are elevational views of a welded rear bulkhead sub-assembly;

Fig. 6 are elevational views of a welded front bulkhead sub-assembly;

Figs. 7 to 11 are perspective views of various structural elements and parts of welded sub-assemblies;

Fig. 12 is a rear and sectional and detail view of a refrigerated van body version;

Fig. 13 is a section on the line A-A of Fig. 12;

Fig. 14 are detail and sectional views of a box van body version;

Figs. 15 and 16 are sectional plan view and vertical sectional view of a curtainsided van body version; and

Fig. 17 shows various views of a streamlined front bulkhead.

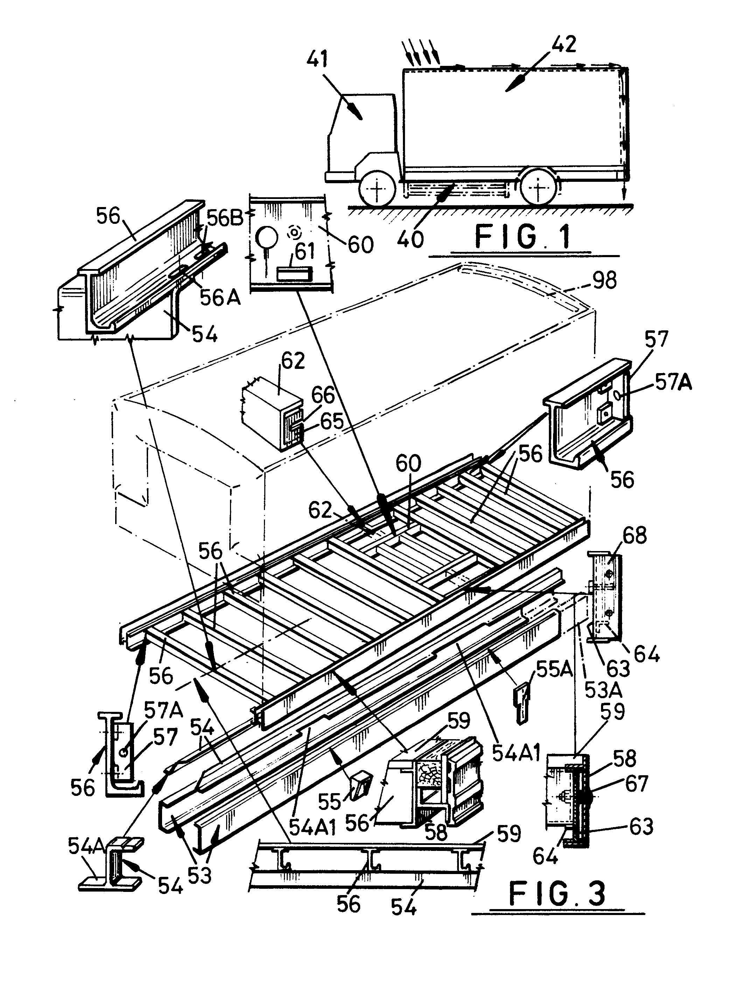

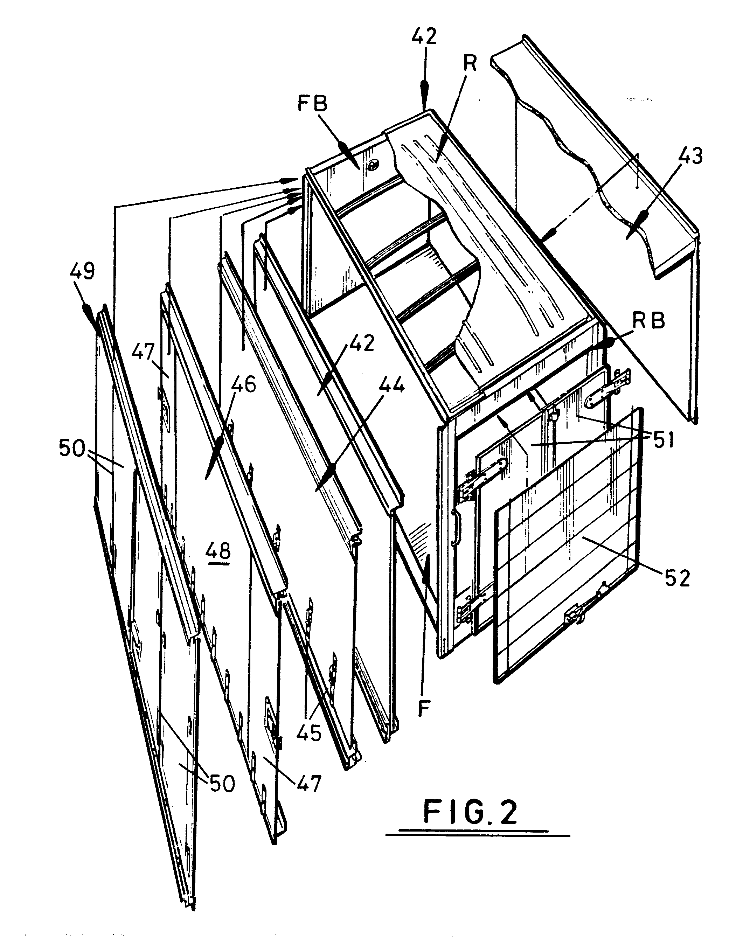

A 7.5 tonne vehicle (Fig. 1) comprises a vehicle chassis 40 with driving cab 41 and a van body 42 according to the invention mounted on the chassis 40.

The van body 42 is of bolted and/or rivetted GRP plywood or aluminium construction and can be any one of the versions A to J hereinbefore listed bearing in mind that one version can have two different side closure assemblies if specified by the customer.

The van body 42 (see Fig. 2) comprises a floor F, a roof R, a front bulkhead FB and a rear bulkhead RB, the two bulkheads FB and RB supporting the roof R above the floor F and providing a basic open-sided van body whereof the sides can be closed by different side closure assemblies as previously specified.

In Fig. 2, five different side closure assemblies are shown as examples. These are a fixed wall 42, namely a solid multi-ply, GRP-coated side wall (body version A); an insulated fixed wall 43, namely a multi-ply, GRP coated sandwich with an infill a highly rated plastics foam (body version C); a curtain side assembly 44 incorporating vertical tensioning straps and buckles 45 and capable of being horizontally tensioned in the closed condition (body version E); a combined curtain/door (panel) side assembly 46 comprising two rigid end panels 47 of GRP-coated multi-ply connected to an intermediate curtain 48 (body version H); and a sliding door side assembly 49 comprising sliding doors 50, for example four (body version I).

Thus, one version of a van body according to the present invention can be readily changed to another version simply by removing the side closure assemblies and substituting others to suit the customers requirements.

The rear bulkhead can be closed by hinged doors 51, a vertically sliding shutter 52, or a solid fixed wall (not shown) if the van body has side access.

It will be manifest from what has been stated hereinbefore that each basic body version A, E, H, I has a chilled and/or a refrigerated version, and it will be manifest that a side closure assembly of a basic body version would not be replaced by the equivalent chilled or refrigerated side assembly. More specifically there can be interchange between basic body version side closure assemblies, chilled body version side closure assemblies, or refrigerated body version side closure assemblies.

·The preferred method of manufacturing a van body according to the present invention is effected in two distinct stages, namely manufacture of the van body version required by the customer, and adaptation of the chassis to receive the pre-assembled van body version followed by mounting of the latter on the adapted chassis and bolting and/or rivetting of the two together. It will be manifest that the van body version and chassis can subsequently be additionally coupled together by welding or other conventional securing means if considered necessary or desirable.

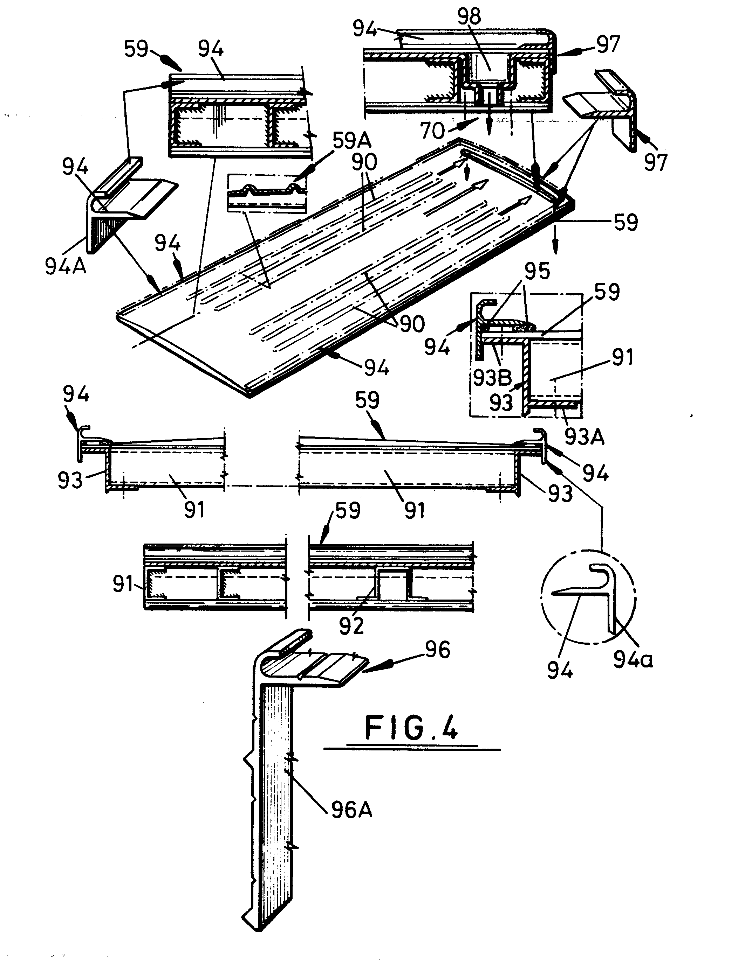

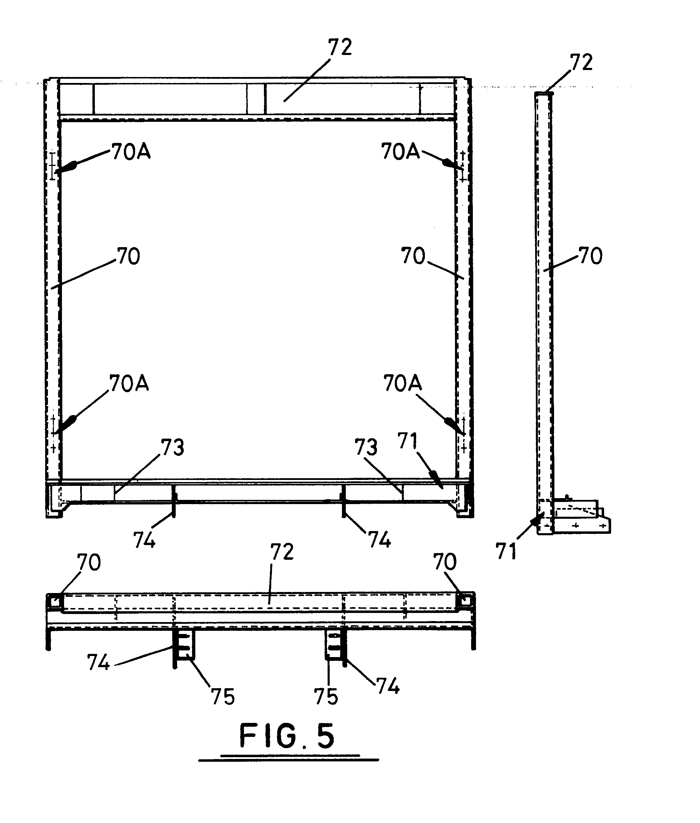

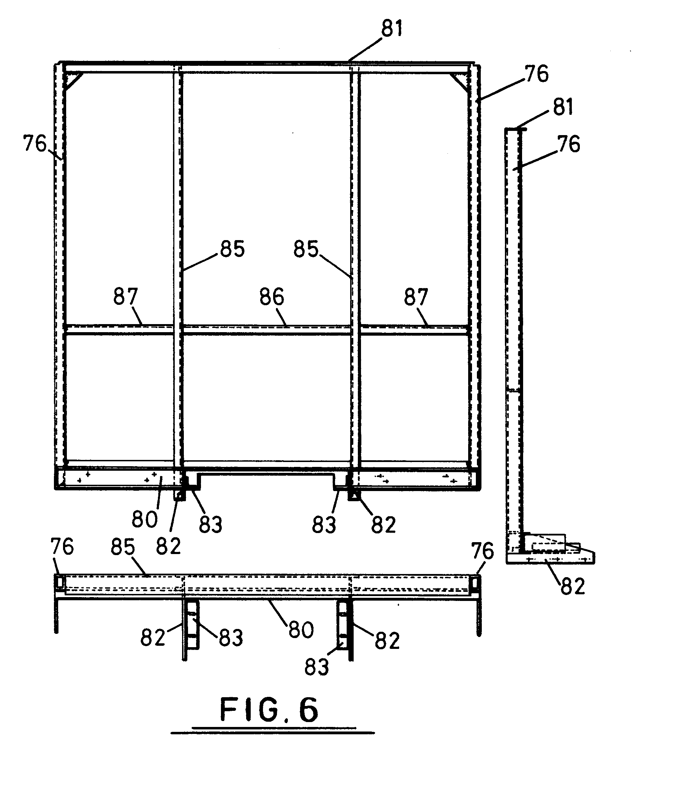

Each van body version comprises a bolted or rivetted floor sub-assembly (Fig. 3), a welded rear bulkhead sub-assembly (Fig. 5), a welded front bulkhead sub-assembly (Fig. 6) and a roof (Fig. 4), all bolted and/or welded, preferably pop-welded, together to define an open-sided van body to which selected side closure assemblies can be bolted and/or rivetted, the assembled van body then being located on the adapted chassis and the two are bolted and/or rivetted together.

For convenience reference will hereinafter be made only to "bolting".

Generally, the preparation work on the chassis is for the purpose of ensuring that the common floor sub-assembly will be accepted by any of the chassis versions and with this in mind a bolt-receiving hole and/or slot connecting interface is provided. Preferably transversely- extending slots are provided in transverse bearers of the floor sub-assembly and holes are formed in runners 54 which are connected, by bolting, to the existing frame members 53 of the chassis. There is thus created a common connecting interface between any chassis version and any van body version.

It may be necessary with some chassis versions to extend the frame members 53 and, if so, channel configuration extensions 53A are bolted to the rear end of the chassis frame members 53. Brackets (not shown) may be bolted to the extended chassis frame members 53A, if necessary to mount underrun bars.

The adaptation runners 54 are of channel configuration with an extension tail 54A. The runners 54 can either be directly bolted onto the chassis frame members 53 or, to comply with chassis manufacturers (such as Ford) requirements indirectly by an angle bracket 55 bolted to the chassis runner member 53 and the extension tail 54A or by a flat bracket 55A where the extension tail 54A is interrupted as indicated at 54A1 as occurs at the rear wheel region of the vehicle chassis.

The floor sub-assembly comprises bearers 56, and at spaced intervals across each bearer 56 is a grouping of two slots 56A, 56B adapted to receive bolts to connect the bearer 56 to each of the runners 54, i.e. the aforesaid interface.

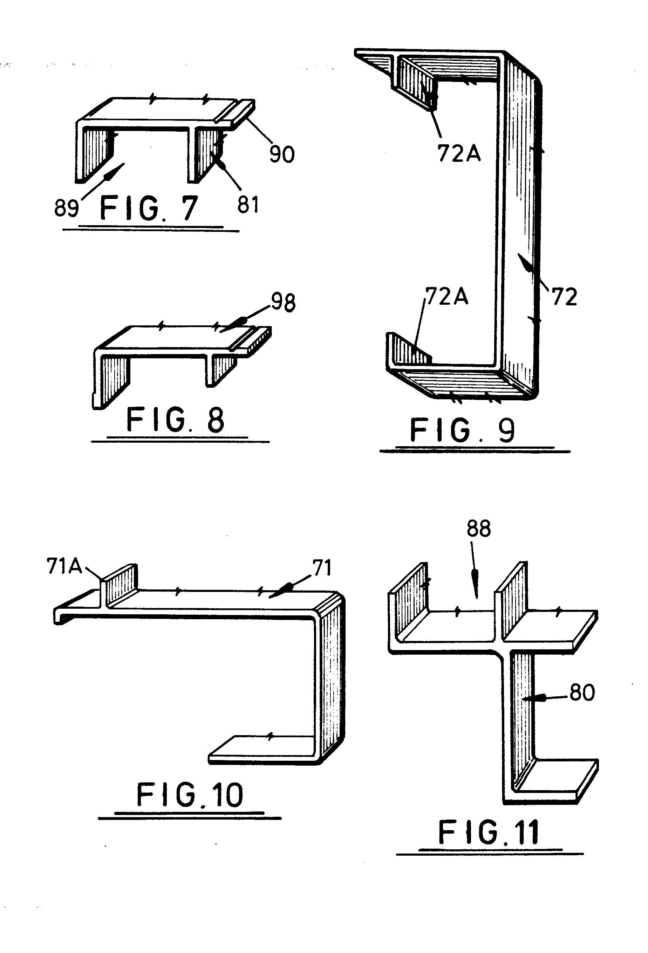

Each bearer 56 (see Fig. 7) is generally of J-configuration and at each end within the channel there is rivetted a right-angle bracket 57 formed with a bolt hole 57A.

The bearers 56 are bolted at each end _via_ the plate 57 and bolt hole 57A into the channel of a channel configuration rave rail 58 (see Fig. 8) which has an upward extension 58A which with the upper flange of the channel provides a locating seating along the edges of the floor sub-assembly for a one-piece floor 59.

The brackets 57 are designed to ensure that the ends of the bearers 56 precisely match the inside faces of the rave rail 58 consequently ensuring precision mounting of the one-piece floor 59.

At the wheelarch locations of the vehicle chassis, the bearers 56 are of short length to leave two wells for the wheels and are bolted to a pair of inverted angle members 60 having at two spaced intervals a locating step 61. An adjustable bearer 62 is bolted between the angle member 60 and the rave 58, its position (one of two) being determined by the wheelbase of the vehicle chassis. Within the rave 58 at this wheelarch location is positioned a stiffener 63 of I-configuration having at corresponding two spaced intervals a locating step 64.

The adjustable bearer 62 (one for each side) is of channel configuration having within its channel at the angle member 60 end a plate (not shown) whereby it can be bolted to the angle member 60, and at its rave 58 end a plate 65 with an open-ended elongate slot 66 through which the adjustable bearer 62 can be bolted to the stiffener 63 as indicated at 67.

The steps 61 and 64 simply serve to locate the adjustable bearer 62.

The stiffener 63 has lateral right-angled wings or flanges 68 permitting it to be bolted within adjacent full width bearers 56.

The above construction substantially strengthens the floor sub-assembly in the region of the wheelarches where otherwise it would be weakened by the provisions of the wells.

As aforesaid, the abovedescribed floor sub-assembly is common to all versions of van body.

The rear bulkhead assembly (Fig. 5) is of welded construction and is also common to all versions of van body. It consists of two side pillars 70 of square tubular section, a bottom bearer 71 and a header 72 which are welded together.

The bottom bearer 71 of channel configuration opens to the front of the van body with its longer limb uppermost and welded within the channel are stiffeners 73, fixing brackets 74 and slotted angle support pads 75. Location plates 76 are provided at each end of the side members 70 at the bottom bearer 71.

The header 72 is also of channel section open to the front of the van body and each limb has an inwardly-directed extension 72A.

The inner end of the upper limb of the bottom bearer 71 has an upstand 71A to define with the upper limb a seating for the one-piece floor 59.

The rear bulkhead sub-assembly is bolted onto the rear end of the floor sub-assembly via the fixing brackets 74 and the support pads 75.

The rear bulkhead may be closed either by hinged doors 51 or a vertically movable shutter 52. The pillars 70 are drilled as indicated at 70A to accept door hinges when the rear bulkhead is to be closed by hinged doors.

The front bulkhead sub-assembly (Fig. 6) is of welded construction and is common to all body versions. It comprises two side pillars 76 of rectangular cross-section, a bottom bearer 80 and a header 81. It has two fixing brackets 82 with associated slotted angled support pads 83 welded within the channel of the bottom bearer 80.

The bottom bearer 80 and the header 81 are also joined by two channel inner posts 85 and these are joined together and to the side member by cross channel members 86 and 87 respectively.

The bottom bearer 80 has an upwardly open channel 88 and the header 81 has a downwardly-open channel 89 with an inwardly-directed flange 90. These channels 88 and 89 with the channels in the inner posts 85 and channel members 86, 86 serve to assist in mounting front wall panels.

The front bulkhead is bolted onto the front end of the floor sub-assembly via the fixing brackets 82 and slotted support pads 83.

The roof 59 is, in this example, of one-piece construction moulded from glass reinforced plastic (GRP) and has a slight downwards run towards its lateral edges (see detail 59A). The roof 59 may have two groups of fore-and-aft rainwater control ridges 90 with the roof having a slight rundown from the ends of the latter to the adjacent roof end. The ridges 90 serve additionally to stiffen the one-piece roof.

The roof 59 is carried on a welded aluminium frame 91 of channel section incorporating roof support strings 92 of top-hat section to which the roof 59 is bolted, which frame 91 is bolted onto the front and rear headers 81, 72 of the front and rear bulkheads.

Along each side edge of the frame 91 is secured a roof edge channel 93 which has a lower flange 93A which engages under the frame 91 and an upper outwardly-directed flange 93B on which the roof 59 rests. Securement is by bolting. A rain gutter 94 is fixed along each lateral edge of the roof 59 by bolting and adhesive strips 95. This gutter is for basic van body versions.

For chilled or refrigerated van body versions there is provided a rain gutter 96 which is essentially the same as rain gutter 94 save that it has a longer depending limb 96A than the depending limb 94A of the gutter 94 to accommodate the increased thickness of roof resulting from the insulation necessary in both cases.

At the rear end of the roof 59 is a rain gutter 97 of C-section. Adjacent the gutter 97 is a channel 98 in the roof 59, which channel opens into the rear vertical pillars 70 down which rainwater flow (see Fig. 1) for disposal and the rear and bottom of the van body.

These rain control elements are common to all versions of the van bodies.

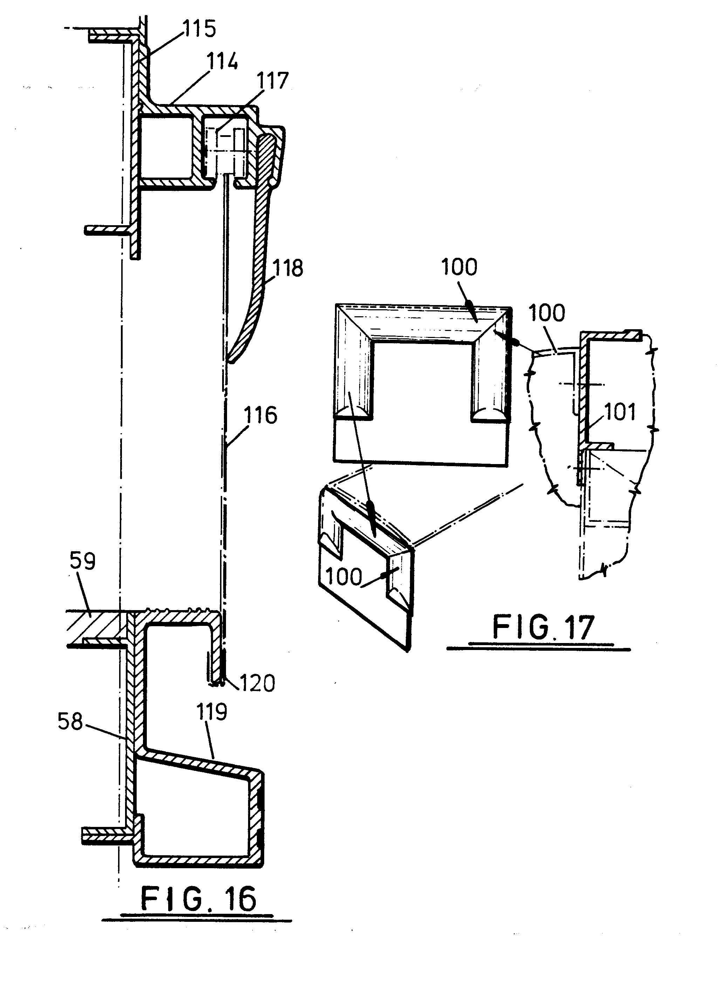

Fig. 17 shows a plastics moulded bow front 100 of one-piece construction serving to reduce wind resistance. This is a component which is common to all versions of the van body save those where a chiller unit or refrigerator unit is provided, and presents an uninterrupted surface at the front of the van body. This is bolted at its rear to a structural element 101 associated with the front bulkhead.

The side closure assemblies are, it will be appreciated, readily assembled on and removable from the van body carcass constituted by floor, roof and front and rear bulkheads since they are fitted and secured by bolting and/or rivetting and possibly adhesives or other readily releasable securement.

Generally a side closure assembly will comprise a top or cant rail, a bottom rail or rave, an upper track in the case of a curtain side closure assembly and a combined curtain/panel or door side closure assembly, and upper and lower tracks in the case of sliding door closure assemblies. Wherever possible these structural elements are designed to be common to all or as many van body versions as possible.

Various trims and capping elements are provided to cover and conceal joints and again where possible these are designed to be common to as many van body versions as possible.

Details of three side closure assemblies will now be described simply by way of example.

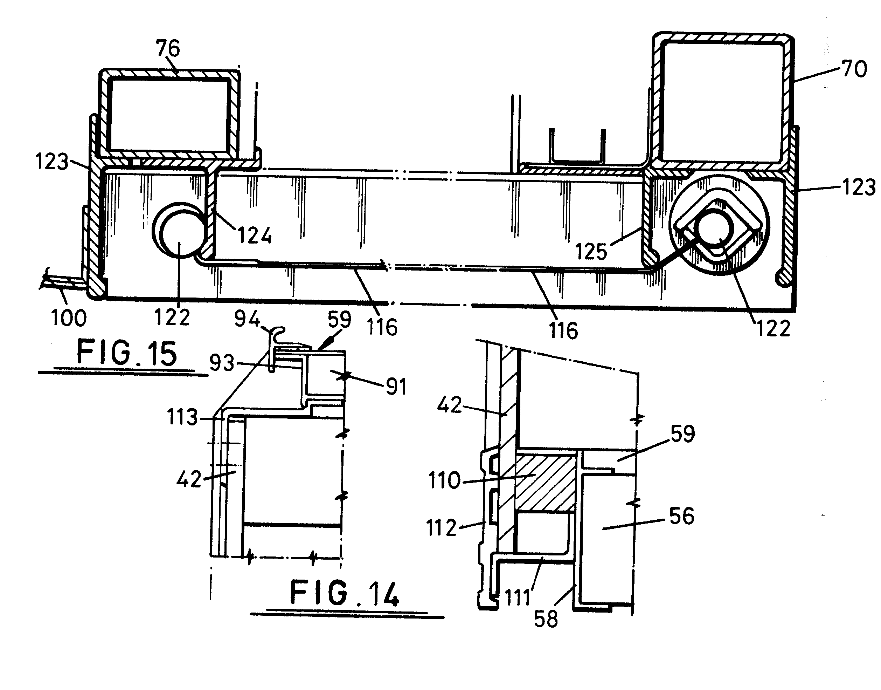

In Fig. 14 there is shown the upper and lower ends of a box van version. The side closure assembly is a GRP-coated multi-ply wall 42 spaced from the rave 58 by wooden battens or stringers 110 and supported on a bottom rail 111 bolted to the rave 58. A rubbing rail 112 finishes off and seals the bottom of the side closure assembly. The top of the box van body side assembly is substantially as described with reference to Fig. 4, the wall 42 being bolted for support to a top rail 113 which caps and seals the wall.

In Figs. 15 and 16 there is shown details of a curtain side closure assembly namely an upper track 114 secured to a top rail 115, a curtain 116, rollers 117 and valance 118. At floor level is a rave 119 onto which the curtain strap hooks 120 can be engaged.

The curtain 116 has two end poles 121, 122 housed in two open pillars defined by structural elements 123, 124 and 125.

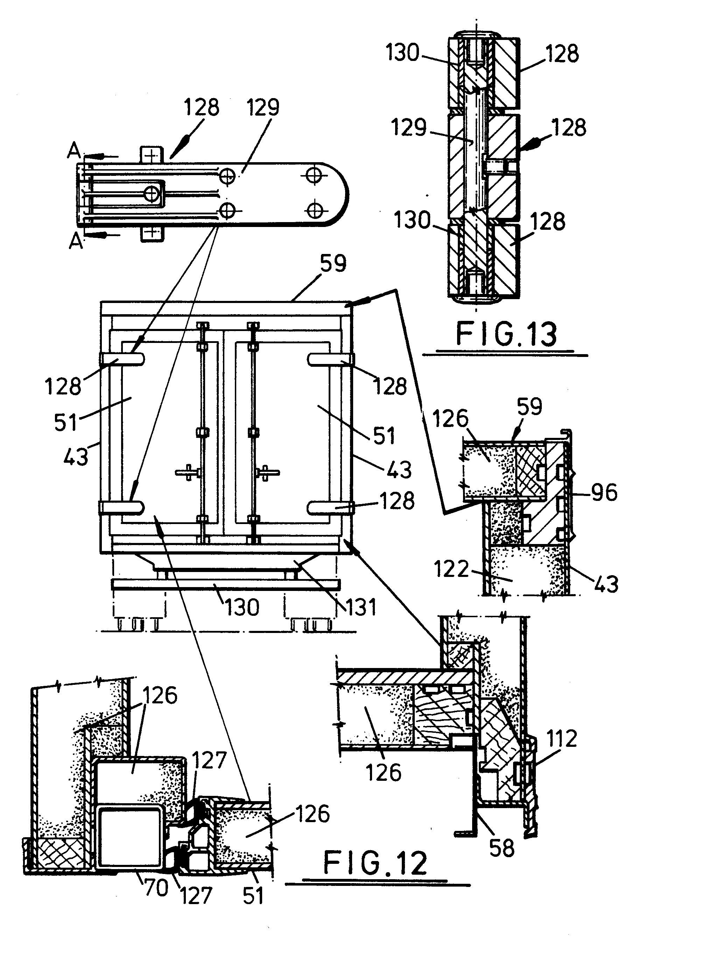

In Fig. 12 there is illustrated details of a refrigerated van body where it can be seen that the floor 59 side walls 43 and doors 51 are provided with high duty foam plastics infills 126.

The doors 51 have around their edges double flexible channel sealing elements 127 providing a labyrinthal sealing structure.

The insulation is such that the refrigerated van body merits an ATP certificate type C.

A cooler or refrigerator unit is mounted on the front bulkhead in these non-basic van body versions.

The doors 51 are mounted by means of a novel hinge 128 having a forked member 129 connected with the door 51 and rotatable about a hinge pin 129 connected to the vertical pillar 70 of the rear bulkhead, the bearings 130 of the hinge being at the ends of the pin 129 so that loads on the hinge are considerably reduced and there is uniform wear.

A rear step 130 is provided on the various van body versions and the rear lamps and number plate are mounted above same at 131.

Examples of curtainsided closure assemblies, insulated curtainsided closure assemblies and curtain/panel or door side closure assemblies can be seen in United Kingdom Patents 1262879, 2106166 and 2106573 respectively.

- 16 -

CLAIMS:

1. A van body comprising a floor, a roof, a front bulkhead, a rear bulkhead bolted and/or rivetted together to define a van body carcass with two opposed open sides, each of which is closed or closable by a side closure assembly selected from a solid wall closure assembly, a vertically and horizontally tensionable slidable curtain assembly, a combined slidable curtain and solid end panel closure assembly, and a sliding door closure assembly with each side closure assembly being detachable for replacement purposes or for substitution by another and different side closure assembly.

2. A van body as claimed in claim 1, in which each side closure assembly is of insulated construction to permit the van body to be employed for transporting chilled or refrigerated products.

3. A van body as claimed in claim 2, in which the van body carcass is also of insulated construction.

4. A van body as claimed in claim 2 or 3, in which a cooler unit or a refrigerator unit is mounted on the front bulkhead.

5. A van body as claimed in any one of claims 1 to 4, in which the floor has bearers slotted to permit an assembled van body to be bolted onto a vehicle chassis.

6. A van comprising a van body as claimed in claim 5 and a vehicle chassis having runners formed with bolt-receiving holes, the floor bearers and runners interfacing to permit bolting of the van body and chassis together.

7. A method of producing a freight-carrying vehicle comprising pre-assembling a van body as claimed in claim 5, mounting runners on a vehicle chassis, which runners have bolt-receiving holes, mounting the van body on the runners to interface the floor bearer slots with the runner holes and bolting the van body to the chassis.

FIG. 1

FIG. 3

FIG.2

0218483

FIG.4

FIG.5

FIG. 6

FIG. 7

89    81    90

FIG. 8

98

FIG. 9

72A    72A    72

FIG. 10

71A    71

FIG. 11

88    80

0218483

FIG.13

FIG.12

FIG.15

FIG.14

0218483

9 — 9

0218483

FIG. 16

FIG. 17